# EUROPEAN PATENT SPECIFICATION

(11) **EP 4 234 978 B1**
(45) Date of publication and mention of the grant of the patent: **22.01.2025**
(21) Application number: 22866416.5
(22) Date of filing: 24.08.2022
(51) Int. Cl.: F16H 19/08, F16H 37/12, A63B 23/035, F16H 19/00

(54) **REHABILITATION EXERCISE APPARATUS AND ROPE TRANSMISSION DEVICE**
REHABILITATIONSÜBUNGSVORRICHTUNG UND SEILÜBERTRAGUNGSVORRICHTUNG
APPAREIL D'EXERCICE DE RÉÉDUCATION ET DISPOSITIF DE TRANSMISSION DE CORDE

(30) Priority: 09.09.2021 CN 202111054392
(43) Date of publication of application: 30.08.2023
(73) Proprietor: SHANGHAI FOURIER INTELLIGENCE CO., LTD, Shanghai 201203 (CN)
(72) Inventor: XIAO, Danping, Shanghai 201203 (CN); YANG, Zhihao, Shanghai 201203 (CN); SUN, Jiajun, Shanghai 201203 (CN); ZHANG, Ke, Shanghai 201203 (CN)
(74) Representative: Chung, Hoi Kan
(86) International application number: PCT/CN2022/114481
(87) International publication number: WO 2023/035946

(56) References cited:
- EP-A1- 2 505 233
- CN-A- 104 784 889
- CN-A- 105 972 170
- CN-A- 107 041 804
- CN-A- 113 669 425
- CN-U- 209 204 563
- CN-U- 212 347 600
- CN-U- 216 148 976
- CN-U- 216 158 213
- US-A- 5 105 672
- US-A1- 2019 282 425
- US-B2- 9 568 074

## Description

### TECHNICAL FIELD

The present invention relates to the field of rehabilitation equipment, and more particularly to rehabilitation exercise equipment and a rope transmission device for driving a limb fixing assembly.

### BACKGROUND

Gear transmission mechanisms or chain transmission mechanisms are widely used in the field of mechanical transmission. It is also generally necessary to use some transmission mechanisms in the field of medical antagonistic rehabilitation training apparatuses to enable the linkage of mechanical structures.

However, for medical antagonistic rehabilitation training apparatuses, the transmission mechanism is often required to provide stable power, and the transmission mechanism is also required to drive the reciprocating motion of the corresponding mechanism. This makes it possible for a user to perform a rehabilitation exercise in such a way that the movement of the limbs can be easily withdrawn and stretched out. In addition, since the user using the antagonistic rehabilitation training apparatus is subjected to a limited tensile force, the amount of force that the medical antagonistic rehabilitation training apparatus adds to the user each time needs to be strictly controlled to prevent the force that the medical antagonistic rehabilitation training apparatus applies to the user from deviating from the expected force applied to the user. It is conceivable that if the force applied to the user by the medical antagonistic rehabilitation training apparatus is greater than the expected force applied to the user due to the deviation, the injury at the rehabilitation training part of the user will be easily aggravated.

However, it is difficult for the mechanical transmission manner of the prior art to provide stable power to the user because the transmission mechanism generates a large vibration during the operation.

On the other hand, in the prior art, a transmission mechanism (gear transmission mechanism or chain transmission mechanism) generates a large noise during the operation, thereby providing the user with a poor experience.

In addition, a part of the medical antagonistic rehabilitation training apparatus tends to train a certain part of the user correspondingly. However, before each exercise, the user usually cannot accurately and correspondingly keep the part to be exercised at the specific position of the medical antagonistic rehabilitation training apparatus. Therefore, it is common in the prior art to rely on a rehabilitation trainer for guidance. However, as the rehabilitation training continues, the part where the user needs to be trained may deviate from the part corresponding to the medical antagonistic rehabilitation training apparatus, and at this time, it is often difficult for the user himself/herself to make corrections. However, if a gear or a chain transmission manner is used for the transmission, since neither the chain nor gear is transmitted in a stepless manner, when a gear transmission or a chain transmission is used for transmission, the joint or tissue of a user is easily damaged due to a large movement range.

US2019/0282425A discloses a robotic device for operation in association with an appendage of a user.

### SUMMARY

It is an object of the present invention to provide rehabilitation exercise equipment and a rope transmission device thereof. The rope transmission device is capable of providing a stable pressure to a user so as to prevent a force applied to the user by the rope transmission device from being greater than the force expected to be applied to the user, which would otherwise aggravate the injury at a rehabilitation training part of the user.

Another object of the present invention is to provide rehabilitation exercise equipment and a rope transmission device thereof. The rope transmission device can steadily increase a user's force each time.

Another object of the present invention is to provide rehabilitation exercise equipment and a rope transmission device thereof. The rope transmission device can be driven in a stepless manner so that a user can move gently while performing rehabilitation training.

In order to achieve at least one of the above objects, the present invention provides a rope transmission device for driving a limb fixing assembly according to claim 1.

According to an embodiment of the present invention, distances between two adjacent groove bodies of the rope winding spiral groove are equal.

According to an embodiment of the present invention, the transmission assembly is embodied as a motor, and the rope winding shaft is embodied as an output shaft of the motor.

According to an embodiment of the present invention, the rope tighteners are mounted to two ends of the oscillating piece.

According to an embodiment of the present invention, the rope tightener comprises a base, a moving block, and a tightness adjusting piece, the base being fixed to one end of the circular arc outer wall portion of the oscillating piece, and the base being provided with a perforation extending in a tangential direction tangential to the outer wall of the circular arc outer wall portion, wherein the moving block can be slidingly connected to the base in a direction in which the perforation extends, and the moving block is connected to the tightness adjusting piece in a way that can be driven.

According to an embodiment of the present invention, the tightness adjusting piece is embodied as a rotatable screw and the moving block is correspondingly provided with a threaded hole matching with the screw, the threaded hole extending in a direction parallel to the direction in which the moving block moves.

According to an embodiment of the present invention, the base forms a sliding cavity, the moving block is slidably mounted in the sliding cavity, the moving block is provided with a mounting hole in a tangential direction tangential to the outer wall of the circular arc outer wall portion, the rope is limited by the moving block after passing through the perforation and the mounting hole on the moving block, and an aperture of the mounting hole is larger than the aperture of the perforation.

According to another aspect of the present invention, the present invention provides rehabilitation exercise equipment, wherein the rehabilitation exercise equipment comprises:
any of the rope transmission devices described above; and
a limb fixing assembly, wherein the limb fixing assembly is connected to the oscillating piece of the rope transmission device.

According to an embodiment of the present invention, the rehabilitation exercise equipment comprises at least two rope transmission devices and at least two link mechanisms, and rotation axes that the rope winding shafts in the two rope transmission devices rotate around are perpendicular to each other; the limb fixing assembly is fixed to the oscillating piece of one of the rope transmission devices by one link mechanism, and the limb fixing assembly is fixed to the oscillating piece of the other rope transmission device by the other link mechanism.

By understanding the subsequent description, further objects and advantages of the present invention will be fully reflected.

These and other objects, features, and advantages of the present invention are fully reflected through the following detailed description.

### BRIEF DESCRIPTION OF DRAWINGS

FIG. 1 shows a perspective view of rehabilitation training equipment of the present invention.
FIG. 2 shows a partially exploded schematic view of rehabilitation training equipment of the present invention.
FIG. 3 is an exploded view showing a partial structure of rehabilitation training equipment according to the present invention.
FIG. 4 shows a schematic view of a partial structure of rehabilitation training equipment of the present invention in one state.

### DETAILED DESCRIPTION OF THE EMBODIMENTS

Those skilled in the art should understand that in the disclosure of the present invention, the orientations or positional relationships indicated by the terms "longitudinal", "transverse", "up", "down", "front", "rear", "left", "right", "vertical", "horizontal", "top", "bottom", "inner", "outer" and the like are based on the orientations or positional relationships shown in the drawings for purposes of describing the present invention and simplifying the description only, and are not intended to indicate or imply that the referenced device or element must have a particular orientation or be constructed and operated in a particular orientation. Therefore, the above terms cannot be understood as limiting the present invention.

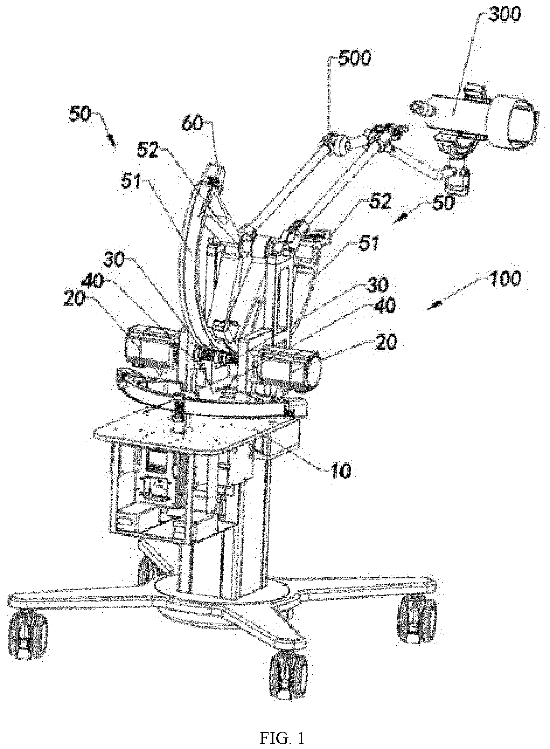

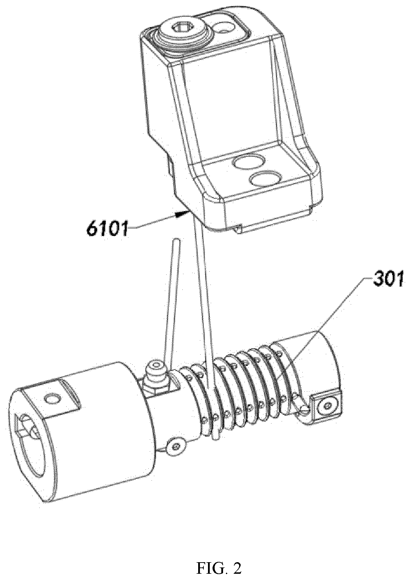

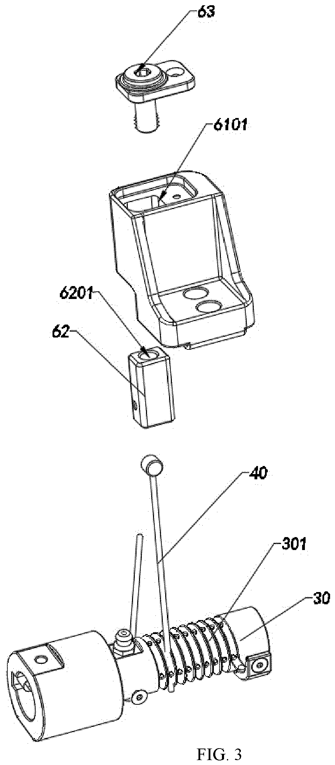

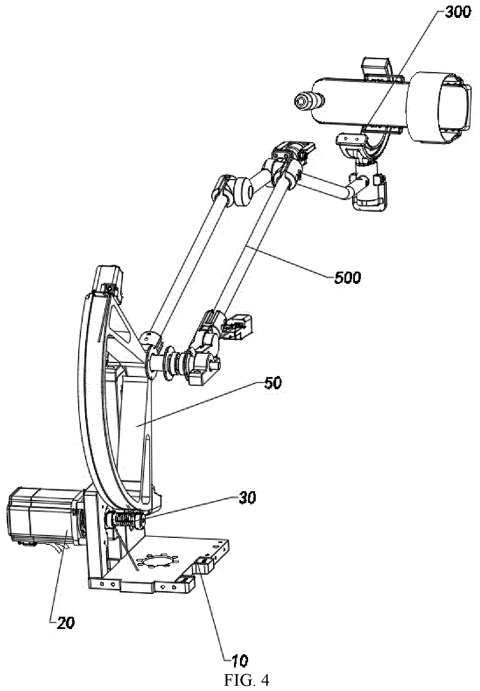

Rehabilitation exercise equipment according to a preferred embodiment of the present invention will be described in detail below with reference to the accompanying drawings FIGs. 1 to 4 of the description. The rehabilitation exercise equipment comprises at least a rope transmission device 100 and a limb fixing assembly 300. The limb movement assembly 300 is connected to the rope transmission device 100 such that the spatial position of the limb movement assembly 300 can be adjusted when the rope transmission device 100 is in operation. In addition, since the limb fixing assembly 300 is carried by the rope of the rope transmission device 100, the rope transmission device 100 has little noise during the operation and when the limb fixing assembly 300 is driven, it can move gently.

Specifically, the rope transmission device 100 includes a device main body 10, a transmission assembly 20, a rope winding shaft 30, at least two ropes 40, and an oscillating piece 50. Preferably, the rope 40 is implemented to be made of a metallic material. Preferably, the rope 40 is a steel wire rope.

The rope winding shaft 30 is rotatably connected to the transmission assembly 20 and mounted to the device main body 10. The oscillating piece 50 is swingably supported to the device main body 10 by two of the ropes 40.

In one embodiment, the rope winding shaft 30 is rotatably connected to an output shaft of the transmission assembly 20 such that the rope winding shaft 30 can be rotated driven by the transmission assembly 20. It is understandable that where the transmission assembly 20 is embodied as a motor, the rope winding shaft 30 may be embodied as the output shaft of the motor.

The peripheral edge of the outer wall of the rope winding shaft 30 is provided with at least one continuous rope winding spiral groove 301. The rope winding spiral groove 301 has an inner end proximal to the transmission assembly 20 and an outer end distal to the transmission assembly 20. After one end of one of the ropes, 40 is fixed, it is partially wound in a part of the groove near the inner end of the rope winding spiral groove 301 of the rope winding shaft 30, and the rope 40 is further fixed to one end of the oscillating piece 50 around the circumference that the oscillating piece 50 oscillates. After one end of the other of the ropes 40 is fixed, it is partially wound in a part of the groove adjacent to the rope winding spiral groove 301, and the rope 40 is fixed to the other end of the oscillating piece 50 around the circumference that the oscillating piece 50 oscillates. Therefore, two ends of the oscillating piece 50 are connected to one of the ropes 40, respectively.

It is worth mentioning that the oscillating piece 50 is mounted at the device main body 10 in such a manner that an oscillation axis around which the oscillating piece 50 oscillates is collinear with the rotation axis of the rope winding shaft 30.

It is worth mentioning that when the transmission assembly 20 drives the rope winding shaft 30 to rotate in one direction, one of the ropes 40 is continuously wound into the rope winding spiral groove 301 and the other rope 40 is continuously wound out of the rope winding spiral groove 301. Accordingly, the part of the rope 40 wound around the oscillating piece 50 on the rope 40 continuously wound in the rope winding spiral groove 301 is wound away from the oscillating piece 50 and drives the oscillating piece 50 to rotate. The part of the rope 40 wound around the oscillating piece 50 on the rope 40 continuously wound out of the rope winding spiral groove 301 is wound around the outer wall of the oscillating circumference of the oscillating piece 50.

It is worth mentioning that when the transmission assembly 20 drives the rope winding shaft 30 to rotate in the opposite direction, the oscillating piece 50 will rotate in the opposite direction.

Therefore, the oscillating piece 50 can oscillate back and forth on the device main body 10. It is worth mentioning that the limb fixing assembly 300 is mounted to the oscillating piece 50 such that when the oscillating piece 50 oscillates, the limb fixing assembly 300 follows the oscillating piece 50 in a synchronized motion.

It is worth mentioning that, since the two ropes 40 are guided by the rope winding spiral groove 301 on the rope winding shaft 30 and can be always maintained in the rope winding spiral groove 301 during the winding and unwinding process, the ropes 40 are not wound away from the rope winding spiral groove 301, thereby preventing the ropes 40 from being wound around each other during the winding and unwinding process.

Preferably, the distances between two adjacent groove bodies of the rope winding spiral groove 301 are equal so that the oscillating piece 50 can gently oscillate. Therefore, the limb fixing assembly 300 connected to the oscillating piece 50 does not move violently, thereby effectively preventing the user from being injured due to the unstable movement of the transmission mechanism during the rehabilitation training.

Further, the oscillating piece 50 has a circular arc outer wall portion 51 and at least one radial connecting portion 52 connected to the circular arc outer wall portion 51. The radial connecting portion 52 is rotatably mounted to the device main body 10.

The rope transmission device 100 comprises a rope tightener 60. Each of the ropes 40 is connected to the rope tightener 60 in a way that can be tightened so that the ropes 40 can be tightened by the rope tightener 60.

Two ends of the circular arc outer wall portion 51 are respectively provided with a rope tightener 60 for respectively fixing one rope 40. That is, one end of the rope 40 is fixed to the rope tightener 60 provided at one end of the circular arc outer wall portion 51. The other rope 40 is fixed to the rope tightener 60 provided at the other end of the circular arc outer wall portion 51. Both of the ropes 40 are wound out and wound in from the outer wall of the circular arc outer wall portion 51 during the process that the swinging member 50 is driven to oscillate.

Preferably, the outer wall of the circular arc outer wall portion 51 is provided with a limiting groove 5101 to prevent the rope 40 from slipping off when the two ropes 40 are wound out and wound in the outer wall of the circular arc outer wall portion 51.

Each of the ropes 40 is connected to the rope tightener 60 that can be tightened in a tangential direction tangential to the circular arc outer wall portion 51. It could be understood that the rope 40 has some extensibility. Therefore, when the rope transmission device 100 is continuously operated for a certain time, the tension of the rope 40 is weakened. If the tension of the rope 40 continues to weaken, the rope 40 will be too loose and may be in one groove body of the rope winding spiral groove 301, i.e., the rope 40 that should have been wound in two adjacent groove bodies will be wound into the same groove body. This causes the oscillating piece 50 on the rope transmission device 100 to oscillate unevenly and it may even not work normally.

However, in the embodiment of the present invention, the rope 40 is connected to the rope tightener 60 in a way that can be tightened in a tangential direction tangential to the circular arc outer wall portion 51, such that when the tension of the rope 40 decreases, the rope 40 can be tightened by the rope tightener 60. In this way, since the rope 40 is maintained within a predetermined tension range when the rope 40 is wounded and unwounded, the rope 40 can be always guided into the rope winding spiral groove 301, thereby ensuring the transmission stability of the rope transmission device 100.

In one embodiment, the rope tightener 60 includes a base 61, a moving block 62, and a tightness adjusting piece 63. The base 61 is fixed to one end of the circular arc outer wall portion 51 of the oscillating piece 50. The base 61 is provided thereon with a perforation 6101 extending in a tangential direction tangential to the outer wall of the circular arc outer wall portion 51. The moving block 62 can be slidably connected to the base 61 in a direction in which the perforation 6101 extends. The moving block 62 is connected to the tightness adjusting piece 63 in a way that can be driven.

It is worth mentioning that each of the ropes 40 is fixed to the moving block 62 after passing through the perforation 6101. In this way, when the tightness of the rope 40 needs to be increased, that is, the tension of the rope 40 is increased, by operating the tightness adjusting piece 63, the moving block 62 can be enabled to slide in the direction of tightening the rope 40. On the contrary, when the tightness of the rope 40 needs to be lowered, that is, the tension of the rope 40 is reduced, the moving block 62 can be enabled to slide in the direction of releasing the rope 40 by operating the tightness adjusting piece 63.

Preferably, the tightness adjusting piece 63 is embodied as a rotatable screw, and the moving block 62 is correspondingly provided with a threaded hole matching the screw. The extending direction of the threaded hole is parallel to the direction in which the moving block 62 moves, so that the moving block 62 can always move in a tangential direction tangential to the outer wall of the circular arc outer wall portion 51 when the tightness adjusting piece 63 is operated. In this way, after the tension of the rope 40 is adjusted, the included angle with the extending direction of the rope winding spiral groove 301 on the rope winding shaft 30 always does not change, so that the rope 40 can always be guided to wind into or wind out of the rope winding guide groove 301 by the rope winding guide groove 301 after the rope winding shaft 30 is driven to rotate.

Specifically, the base 61 is formed with a perforation 6102 communicating with the perforation 6101. The moving block 62 is slidably mounted to the perforation 6102. The moving block 62 is provided with a mounting hole 6201 in a tangential direction tangent to the outer wall of the circular arc outer wall portion 51. The rope 40 is limited by the moving block 62 after passing through the perforation 6101 and the mounting hole 6201 on the moving block 62. It is worth mentioning that the aperture of the mounting hole 6201 is larger than the aperture of the perforation 6101, so that when the rope 40 is moved by the moving block 62, the rope 40 does not rotate but slides only in a direction tangential to the circular arc outer wall portion 51.

The rehabilitation exercise equipment includes at least two rope transmission devices 100 and at least two link mechanisms 500. The rotation axes that rope winding shafts 30 in the two rope transmission devices 100 rotate around are perpendicular to each other. The limb fixing assembly 300 is fixed to the oscillating piece 50 of one rope transmission device by one link mechanism 500, and the limb fixing assembly 300 is fixed to the oscillating piece of the other rope transmission device by the other link mechanism 500.

It should be understood by persons skilled in the art that the embodiments of the invention shown in the foregoing description are by way of example only and are not limiting of the invention. The objects of the present invention have been fully and effectively achieved. The functional and structural principles of the present invention have been shown and described in the embodiments, and any variations or modifications may be made to the implementation modes of the invention without departing from the scope of the invention as defined in the accompanying claims.

## Claims

1. A rope transmission device (100) for driving a limb fixing assembly (300), the rope transmission device (100) comprising:
a device main body (10);
a transmission assembly (20), wherein the transmission assembly (20) is provided to the device main body (10);
a rope winding shaft (30), wherein the rope winding shaft (30) is rotatably connected to the transmission assembly (20), and at least one continuous rope winding spiral groove (301) is provided along a peripheral edge of an outer wall of the rope winding shaft (30), the rope winding shaft (30) having an inner end proximal to the transmission assembly (20) and an outer end remote from the transmission assembly (20);
an oscillating piece (50) for driving the limb fixing assembly (300), wherein the oscillating piece (50) is provided on the device main body (10) in such a way that an oscillating shaft around which the oscillating piece (50) oscillates is collinear with a rotation shaft of the rope winding shaft (30);
two ropes (40), wherein one end of one of the ropes (40) is fixed to the rope winding shaft (30), and it is partially wound in a portion of a groove near the inner end of the rope winding spiral groove (301) of the rope winding shaft (30), and the rope (40) is further fixed to one end of the oscillating piece (50) around a circumference that the oscillating piece (50) oscillates; after one end of the other rope (50) is fixed, it is partially wound in a portion of the groove near the rope winding spiral groove (301), and the rope is fixed to the other end of the oscillating piece (50) around the circumference that the oscillating piece (50) oscillates;
charaterised in that:
the rope transmission device (100) comprises two rope tighteners (60), and the oscillating piece (50) has a circular arc outer wall portion (51) and at least one radial connecting portion (52) connected to the circular arc outer wall portion (51), the radial connecting portion (52) being provided to be rotatably mounted to the device main body (10) about the oscillating axis, wherein each of the ropes (40) is respectively connected to one rope tightener (60) in a way that can be tightened in a tangential direction tangential to the circular arc outer wall portion (51).

2. The rope transmission device (100) according to claim 1, wherein distances between two adjacent groove bodies of the rope winding spiral groove (301) are equal.

3. The rope transmission device (100) according to claim 1, wherein the transmission assembly (20) is embodied as a motor, and the rope winding shaft is embodied as an output shaft of the motor.

4. The rope transmission device (100) according to claim 1, wherein the rope tighteners (60) are mounted to two ends of the oscillating piece (50).

5. The rope transmission device (100) according to claim 4, wherein the rope tightener (60) comprises a base (61), a moving block (62), and a tightness adjusting piece (63), the base (61) being fixed to one end of the circular arc outer wall portion (51) of the oscillating piece (50), and the base (61) being provided with a perforation (6101) extending in a tangential direction tangential to the outer wall of the circular arc outer wall portion (51), wherein the moving block (62) can be slidingly connected to the base (61) in a direction in which the perforation (6101) extends, and the moving block (62) is connected to the tightness adjusting piece (63) in a way that can be driven.

6. The rope transmission device (100) according to claim 5, wherein the tightness adjusting piece (63) is embodied as a rotatable screw and the moving block (62) is correspondingly provided with a threaded hole matching with the screw, the threaded hole extending in a direction parallel to the direction in which the moving block (62) moves.

7. The rope transmission device (100) according to claim 6, wherein the base (61) forms a sliding cavity, the moving block (62) is slidably mounted in the sliding cavity, the moving block is provided with a mounting hole (6201) in a tangential direction tangential to the outer wall of the circular arc outer wall portion (51), the rope (40) is limited by the moving block (62) after passing through the perforation (6101) and the mounting hole (6201) on the moving block (62), and an aperture of the mounting hole (62) is larger than the aperture of the perforation (6101).

8. Rehabilitation exercise equipment, wherein the rehabilitation exercise equipment comprises:
the rope transmission device (100)according to any one of claims 1 to 7; and
a limb fixing assembly (300), wherein the limb fixing assembly (300) is connected to the oscillating piece (50) of the rope transmission device (100).

9. The rehabilitation exercise equipment according to claim 8, wherein the rehabilitation exercise equipment comprises at least two rope transmission devices (100) and at least two link mechanisms (500), and rotation axes that the rope winding shafts (30) in the two rope transmission devices (100) rotate around are perpendicular to each other; the limb fixing assembly (300) is fixed to the oscillating piece (50) of one of the rope transmission devices (100) by one link mechanism (500), and the limb fixing assembly (300) is fixed to the oscillating piece (50) of the other rope transmission device (100) by the other link mechanism (500).

## Patentansprüche

1. Seilübertragungsvorrichtung (100) zum Antrieb einer Gliedmaßenbefestigungsanordnung (300), wobei die Seilübertragungsvorrichtung (100) Folgendes umfasst:
einen Vorrichtungshauptkörper (10);
eine Übertragungsbaugruppe (20), wobei die Übertragungsbaugruppe (20) am Vorrichtungshauptkörper (10) vorgesehen ist;
eine Seilwickelwelle (30), wobei die Seilwickelwelle (30) drehbar mit der Übertragungsbaugruppe (20) verbunden ist und mindestens eine kontinuierliche Seilwickelspiralrille (301) entlang einer Umfangskante einer Außenwand der Seilwickelwelle (30) vorgesehen ist, wobei die Seilwickelwelle (30) ein inneres Ende, das nahe der Übertragungsbaugruppe (20) liegt, und ein äußeres Ende, das entfernt von der Übertragungsbaugruppe (20) ist, aufweist;
ein oszillierendes Teil (50) zum Antreiben der Gliedmaßenbefestigungsanordnung (300), wobei das oszillierende Teil (50) an dem Vorrichtungshauptkörper (10) derart vorgesehen ist, dass eine oszillierende Welle, um die das oszillierende Teil (50) oszilliert, kollinear mit einer Drehwelle der Seilwickelwelle (30) ist;
zwei Seile (40), wobei ein Ende eines der Seile (40) an der Seilwickelwelle (30) befestigt ist und es teilweise in einem Abschnitt einer Rille in der Nähe des inneren Endes der Seilwickelspiralrille (301) der Seilwickelwelle (30) aufgewickelt ist, und das Seil (40) weiter an einem Ende des oszillierenden Teils (50) um einen Umfang befestigt ist, den das oszillierende Teil (50) schwingt; nachdem ein Ende des anderen Seils (50) befestigt ist, wird es teilweise in einen Abschnitt der Rille in der Nähe der Seilwickelspiralrille (301) gewickelt, und das Seil wird am anderen Ende des oszillierenden Teils (50) um den Umfang herum befestigt, den das oszillierende Teil (50) schwingt;
**dadurch gekennzeichnet, dass**
die Seilübertragungsvorrichtung (100) zwei Seilspanner (60) aufweist, und das oszillierende Teil (50) einen kreisbogenförmigen Außenwandabschnitt (51) und mindestens einen mit dem kreisbogenförmigen Außenwandabschnitt (51) verbundenen radialen Verbindungsabschnitt (52) aufweist, wobei der radiale Verbindungsabschnitt (52) dazu vorgesehen ist, um die Oszillationsachse drehbar am Vorrichtungshauptkörper (10) gelagert zu werden, wobei jedes der Seile (40) jeweils mit einem Seilspanner (60) so verbunden ist, dass es in einer tangentialen Richtung tangential zum kreisbogenförmigen Außenwandabschnitt (51) gespannt werden kann.

2. Seilübertragungsvorrichtung (100) nach Anspruch 1, wobei die Abstände zwischen zwei benachbarten Rillenkörpern der Seilwickelspiralrille (301) gleich sind.

3. Seilübertragungsvorrichtung (100) nach Anspruch 1, wobei die Übertragungsbaugruppe (20) als Motor ausgebildet ist und die Seilwickelwelle als Abtriebswelle des Motors ausgebildet ist.

4. Seilübertragungsvorrichtung (100) nach Anspruch 1, wobei die Seilspanner (60) an zwei Enden des oszillierenden Teils (50) montiert sind.

5. Seilübertragungsvorrichtung (100) nach Anspruch 4, wobei der Seilspanner (60) eine Basis (61), einen beweglichen Block (62) und ein Straffheitseinstellteil (63) umfasst, wobei die Basis (61) an einem Ende des kreisbogenförmigen Außenwandabschnitts (51) des oszillierenden Teils (50) befestigt ist, und die Basis (61) mit einer Perforation (6101) versehen ist, die sich in einer tangentialen Richtung tangential zu der Außenwand des kreisbogenförmigen Außenwandabschnitts (51) erstreckt, wobei der bewegliche Block (62) gleitend mit der Basis (61) in einer Richtung verbunden werden kann, in der sich die Perforation (6101) erstreckt, und der bewegliche Block (62) mit dem Straffheitseinstellteil (63) in einer Weise verbunden ist, dass er angetrieben werden kann.

6. Seilübertragungsvorrichtung (100) nach Anspruch 5, wobei das Straffheitseinstellteil (63) als drehbare Schraube ausgebildet ist und der bewegliche Block (62) entsprechend mit einer zu der Schraube passenden Gewindebohrung versehen ist, wobei sich die Gewindebohrung in einer Richtung parallel zu der Richtung erstreckt, in der sich der bewegliche Block (62) bewegt.

7. Seilübertragungsvorrichtung (100) nach Anspruch 6, wobei die Basis (61) einen verschiebbaren Hohlraum bildet, der bewegliche Block (62) verschiebbar in dem verschiebbaren Hohlraum montiert ist, der bewegliche Block mit einem Montageloch (6201) in einer tangentialen Richtung tangential zu der Außenwand des kreisbogenförmigen Außenwandabschnitts (51) versehen ist, das Seil (40) durch den beweglichen Block (62) begrenzt wird, nachdem es durch die Perforation (6101) und das Montageloch (6201) auf dem beweglichen Block (62) hindurchgegangen ist, und eine Öffnung des Montagelochs (62) größer als die Öffnung der Perforation (6101) ist.

8. Rehabilitationsübungsgerät, wobei das Rehabilitationsübungsgerät umfasst:
die Seilübertragungsvorrichtung (100) nach einem der Ansprüche 1 bis 7; und
eine Gliedmaßenbefestigungsanordnung (300), wobei die Gliedmaßenbefestigungsanordnung (300) mit dem oszillierenden Teil (50) der Seilübertragungsvorrichtung (100) verbunden ist.

9. Rehabilitationsübungsgerät nach Anspruch 8, wobei das Rehabilitationsübungsgerät mindestens zwei Seilübertragungsvorrichtungen (100) und mindestens zwei Verbindungsmechanismen (500) umfasst, und die Rotationsachsen, um die sich die Seilwickelwellen (30) in den beiden Seilübertragungsvorrichtungen (100) drehen, senkrecht zueinander verlaufen; die Gliedmaßenbefestigungsanordnung (300) an dem oszillierenden Teil (50) einer der Seilübertragungsvorrichtungen (100) durch einen Verbindungsmechanismus (500) befestigt ist, und die Gliedmaßenbefestigungsanordnung (300) an dem oszillierenden Teil (50) der anderen Seilübertragungsvorrichtung (100) durch den anderen Verbindungsmechanismus (500) befestigt ist.

## Revendications

1. Dispositif de transmission en corde (100) pour entraîner un assemblage de fixation à membre (300) qui comprend :
un corps de dispositif principal (10) ;
un assemblage de transmission (20), qui est disposé audit corps du dispositif principal (10) ;
un arbre d'enroulement à corde (30), dans lequel ledit arbre d'enroulement à corde (30) est lié en rotation audit assemblage de transmission (20), et au moins une rainure spirale d'enroulement à corde (301) en continu est disposée le long d'un bord périphérique d'une paroi extérieure dudit arbre d'enroulement à corde (30), et qui dispose d'une extrémité intérieure proche audit assemblage de transmission (20) et d'une extrémité extérieure éloignée dudit assemblage de transmission (20) ;
une pièce oscillante (50) pour entraîner ledit assemblage de fixation à membre (300), dans laquelle ladite pièce oscillante (50) est disposée sur ledit corps de dispositif principal (10) au
moyen de mettre un arbre oscillant autour duquel ladite pièce oscillante (50) oscille en collinéation avec un arbre de rotation dudit arbre d'enroulement à corde (30) ; et
deux cordes (40), dans lesquelles une extrémité de l'un desdites cordes (40) est fixée audit arbre d'enroulement à corde (30), et cette corde est partiellement enroulée dans une partie d'une rainure près de l'extrémité intérieure de ladite rainure spirale d'enroulement à corde (301) dudit arbre d'enroulement à corde (30), cette corde est en outre fixée à une extrémité de ladite pièce oscillante (50) autour d'une circonférence que ladite pièce oscillante (50) oscille ; après qu'une extrémité de l'autre corde (50) est fixée, cette corde est partiellement enroulée dans une partie de la rainure près ladite rainure spirale d'enroulement à corde (301), et cette corde est fixée à l'autre extrémité de ladite pièce oscillante (50) autour de la circonférence que ladite pièce oscillante (50) oscille ;
**caractérisé en ce que** le dispositif de transmission en corde (100) comprend deux tendeurs à corde (60), ladite pièce oscillante (50) dispose d'une partie de paroi extérieure en arc de cercle (51) et d'au moins une partie de liaison radiale (52) liée à ladite partie de paroi extérieure en arc de cercle (51), ladite partie de liaison radiale (52) est disposée en rotation audit corps de dispositif principal (10) sur un axe oscillant, où chacune desdites cordes (40) est respectivement liée à l'un desdits deux tendeurs à corde (60) de manière à pouvoir être tendue en sens tangentiel à ladite partie de paroi extérieure en arc de cercle (51).

2. Dispositif de transmission en corde (100) selon la revendication 1, **caractérisé en ce que** des distances entre deux corps de rainure adjacents de ladite rainure spirale d'enroulement à corde (301) sont égales.

3. Dispositif de transmission en corde (100) selon la revendication 1, **caractérisé en ce que** ledit assemblage de transmission (20) est fourni comme un moteur, et ledit arbre d'enroulement à corde (30) est fourni comme un arbre de sortie du moteur.

4. Dispositif de transmission en corde (100) selon la revendication 1, **caractérisé en ce que** lesdits tendeurs de corde (60) sont disposés aux deux extrémités de ladite pièce oscillante (50).

5. Dispositif de transmission en corde (100) selon la revendication 4, **caractérisé en ce que** ledit tendeur de corde (60) comprend une base (61), un bloc mobile (62) et une pièce de réglage à tension (63), ladite base (61) est fixée à une extrémité de ladite partie de paroi extérieure en arc de cercle (51) de ladite pièce oscillante (50), ladite base (61) dispose d'une perforation (6101) s'étendant en sens tangentiel à la paroi extérieure de ladite partie de paroi extérieure en arc de cercle (51), ledit bloc mobile (62) peut être lié de manière coulissante à ladite base (61) en sens en lequel ladite perforation (6101) s'étend, et ledit bloc mobile (62) est lié à ladite pièce de réglage à tension (63) de manière à pouvoir être entraînée.

6. Dispositif de transmission en corde (100) selon la revendication 5, **caractérisé en ce que** ladite pièce de réglage à tension (63) est fournie comme une vis rotatable, ledit bloc mobile (62) dispose de manière correspondant d'un trou à pas de vis correspondant à la vis, et ledit trou à pas de vis s'étend en sens en lequel ledit bloc mobile (62) se déplace.

7. Dispositif de transmission en corde (100) selon la revendication 6, **caractérisé en ce que** ladite base (61) forme une cavité coulissante, ledit bloc mobile (62) est disposé de manière coulissante dans ladite cavité coulissante, ledit bloc mobile dispose d'un trou d'installation (6201) en sens tangentiel à la paroi extérieure de ladite partie de paroi extérieure en arc de cercle (51), la corde (40) est limitée par ledit bloc mobile (62) après traverser ladite perforation (6101) et ledit trou d'installation (6201) sur ledit bloc mobile (62), et une ouverture dudit trou d'installation (6201) est plus grande que l'ouverture de ladite perforation (6101).

8. Dispositif d'exercice à rééducation, **caractérisé en ce qu'**il comprend le dispositif de transmission en corde (100) selon l'une quelconque des revendications 1 à 7 ; et un assemblage de fixation à membre (300), qui est lié à ladite pièce oscillante (50) du dispositif de transmission en corde (100).

9. Dispositif d'exercice à rééducation selon la revendication 8, **caractérisé en ce qu'**il comprend au moins deux dispositifs de transmission en corde (100) et au moins deux mécanismes de liaison (500), des axes de rotation autour desquels lesdits arbres d'enroulement à corde (30) dans lesdits deux dispositifs de transmission en corde (100) tournent sont perpendiculaires l'un à l'autre ; ledit assemblage de fixation à membre (300) est fixé à la pièce oscillante (50) de l'un des dispositifs de transmission en corde (100) au moyen de l'un desdits deux mécanismes de liaison (500), et ledit assemblage de fixation à membre (300) est fixé à la pièce oscillante (50) de l'autre des dispositifs de transmission en corde (100) au moyen de l'autre desdits deux mécanismes de liaison (500).
